Europäisches Patentamt

European Patent Office

Office européen des brevets

(19)

(11) Publication number: **0 292 927 B1**

(12)
# EUROPEAN PATENT SPECIFICATION

(45) Date of publication of patent specification: **30.10.91**  (51) Int. Cl.⁵: **A01C 15/02**, A01C 7/02

(21) Application number: **88108302.6**

(22) Date of filing: **25.05.88**

(54) Improvement in or relating to applicators.

(30) Priority: **26.05.87 GB 8712376**

(43) Date of publication of application:
**30.11.88 Bulletin 88/48**

(45) Publication of the grant of the patent:
**30.10.91 Bulletin 91/44**

(84) Designated Contracting States:
**AT BE CH DE ES FR GB GR IT LI LU NL SE**

(56) References cited:
**DE-B- 1 025 432**
**US-A- 1 339 256**
**US-A- 2 370 744**
**US-A- 4 149 658**

(73) Proprietor: **HORSTINE FARMERY LIMITED**
**North Newbald**
**York YO4 3SP(GB)**

(72) Inventor: **Peck, Arthur George Edward**
**3 Wood Drive North Ferriby**
**North Humberside Hull HU14 3AZ(GB)**

(74) Representative: **Oulton, Richard John et al**
**R.J. OULTON & CO. 22 Whitefriargate**
**Hull North Humberside HU1 2EX(GB)**

## Description

This invention relates to applicators and, more particularly, to an applicator for use in agriculture, horticulture and forestry.

Applicators for applying agricultural chemicals are well known in the art and one well known type of applicator, frequently referred to as the "manual" applicator, generally comprises a back-pack reservoir for the agricultural chemical with a duct from the back-pack through a hand-held control device and, therefrom, through a discharge pipe which may be open at its lower end or provided with a nozzle. The control device for such conventional applicators is an on/off valve for opening and closing the path of the agricultural chemical between the back-pack and the discharge pipe.

In the field of agricultural chemicals, and in particular in the field of horticulture and forestry, it is often highly desirable to apply a predetermined dose of chemical to a predetermined spot, well known in the art as, and hereinafter referred at as, "spot" application. Because of the overall construction of the conventional back-pack applicator the rate at which the agricultural chemical is delivered from the discharge pipe is dependant upon the head of the agricultural chemical in the back-pack, the rate of delivery through the on/off valve, the time period the valve is open, the length of the discharge pipe and the angle at which the discharge pipe is presented, and the combination of these flow varying factors makes the application of an accurate dose of chemical extremely difficult to achieve. This problem frequently leads to an under-dosing of the "spot", which will not have the desired effect, or an over-dosing of the "spot" which is wasteful and can often be more damaging than an under-dosing.

In another form of applicator, capable of effecting spot applications, the reservoir of material to be dispensed, the valve arrangement for controlling the flow of material to be dispensed and the outlet for the material being dispensed are arranged in axial alignment within a tubular element and the valving arrangement is controlled by an actuating lever, extending radially from the intended upper end and angularly displaceable about the axis of the tubular element. Such an applicator is disclosed in German Patent No. 1025432.

An inherent problem with such tubular applicators, well recognised in the art, is that the reservoir is relatively small and the device, being wholly hand-held, is awkward and tiring to use.

An object of the present invention is to provide an applicator capable of delivering measured doses of agricultural chemicals.

According to the present invention there is provided a manual applicator, for delivering agricultural chemicals, including a control unit comprising a measuring chamber, inlet means for charging said measuring chamber with chemical, outlet means for discharging chemical from said measuring chamber, first valve means for closing the outlet means to said measuring chamber whilst said chamber is charging with chemical, second valve means for closing the inlet means to said chamber whilst said chamber is discharging chemical through said outlet means and wherein said first and second valve means are interconnected for mutual displacement and a manual actuating lever displaces said first and second valve means between their respective open and closure positions, characterised in that the measuring chamber is within a measuring part of a casing, a handle part of the casing extends from the said measuring part and the actuating lever extends internally within said handle part and has a manually actuable part projecting through an opening in the handle part of the casing.

In one embodiment in accordance with the invention the said outlet means is defined by an annular valve seat in the lower regions of said measuring chamber and said inlet means is defined by an annular valve seat in the upper regions of said measuring chamber, when said chamber is in its normal working orientation.

Preferably said first and second valve means are mounted on a common actuating rod, axially displaceable within the said chamber.

Preferably said actuating rod is axially displaceable by said actuating lever, manually displaceable in one direction and returnable in the other direction by a spring.

In a preferred embodiment in accordance with the invention the measuring chamber is within a measuring part of a casing, a handle part for the control unit extends from the said measuring part of the casing and the said actuating lever extends internally within said handle part and has its end remote from the measuring part terminating in an actuating button exposed through an opening in the casing of the handle part.

Preferably the said measuring chamber is generally cylindrical in configuration and in normal usage of the applicator the central axis of said chamber is substantially vertical.

When the applicator is to be used for delivering solids chemicals in divided form said first and second valve members are preferably conical in configuration with their sloping side walls inclined at an angle greater than the angle of repose for the solids chemical to be passed through the control unit.

In one embodiment said measuring chamber includes an insert, interchangeable with other inserts of different volumes, and whereby the volume of chemical to be dispersed can be adjusted.

Preferably the applicator includes a shut-off valve within the control unit, for shutting-off the supply of chemical to the said measuring chamber.

The invention will now be described further by way of example with reference to the accompanying drawings in which:

Fig. 1, shows, diagrammatically, a gravity-feed applicator in accordance with the present invention,

Fig. 2, shows, diagrammatically and in perspective view, the arrangement at the lower regions of the discharge duct of the applicator shown in Fig. 1 and,

Fig. 3, shows, in cross-section, one arrangement of the control unit for the applicator shown in Fig. 1.

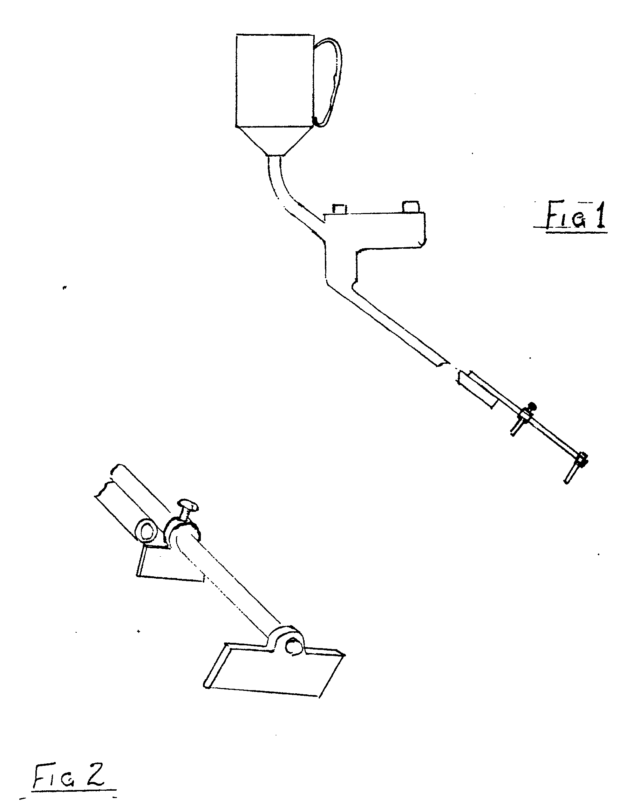

The applicator shown in Fig. 1 is a gravity feed applicator for applying granules and generally comprises a back-pack reservoir 11, with shoulder straps 12, which discharges granules from its lower regions via a flexible duct 13 to a control unit 14. The control unit 14 discharges via a discharge duct 15 which is open at its lower end.

An extension rod 16, secured to the lower regions of duct 15, has a collar 17 slidable thereon and securable, in any desired position on the rod 16, by a screw 18. The collar 17 rigidly supports a deflector plate 19 which, in use, lies in the path of the granules discharged from the open duct 15. By adjusting the position of deflector plate 19 relative to the open end of the duct 15 the distribution pattern of the granules can be varied.

In the illustrated embodiment the rod 16 also rigidly supports, on its end remote from the discharge duct 15, a blade 20 which may be used as a spade or hoe to disturb the ground before or after application of the granules and/or to cover the granules after application.

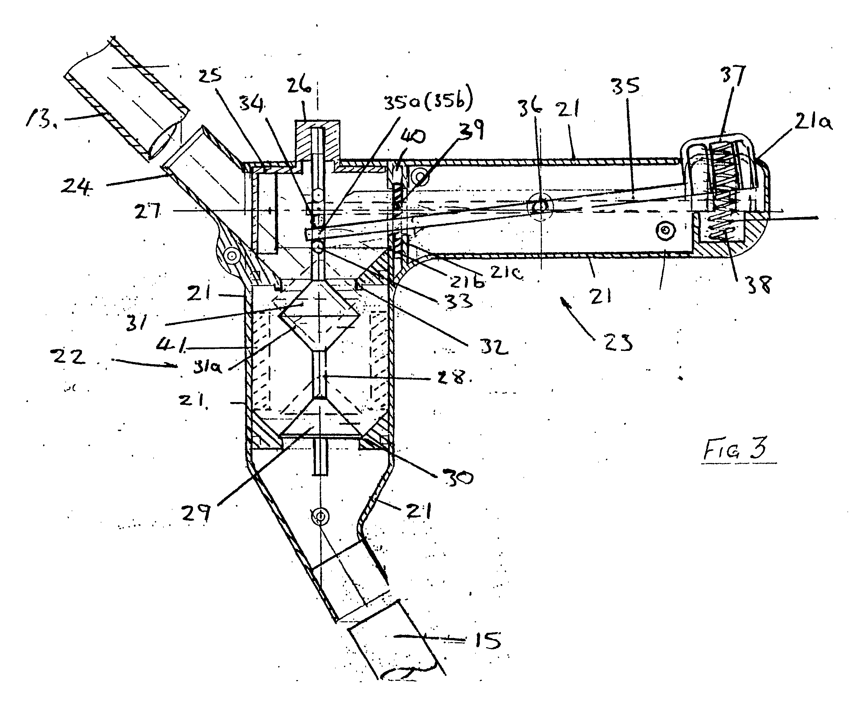

As will be seen from Fig. 3 the control unit 14 comprises a casing 21, which may be a split casing to assist assembly of the internal elements, defining a measuring part 22 with a handle part 23.

The measuring part 22 is generally cylindrical, with its axis substantially vertical when in use, and a tubular extension 24 connects with the flexible duct 13 to allow granules to enter the upper regions of the measuring part 22.

A rotary valve member, generally identified by numeral is 25, is rotatable within the upper regions of measuring part 22 about the axis of measuring part 22 and presents a cylindrical actuating element 26, which extends through the casing 21 for manual manipulation, and a cylindrical wall section 27 within measuring part 22.

The cylindrical wall section 27, by rotation of the actuating part 26, can be displaced to a position where it closes the opening of the extension 24 to the upper regions of measuring part 22, thereby to prevent the flow of granules to the measuring part 22, or to another location where said wall section 27 is displaced away from the opening of extension 24 to allow the flow of granules into the measuring part 22. Thus, the valve 25 acts as an on/off valve.

An actuating rod 28, coaxially supported within the measuring part 22 and axially displaceable therein, supports a conical valve member 29, engageable with an annular valve seat 30 in the lower regions of the measuring part 22, and a conical valve member 31 engageable with an annular valve seat 32 spaced above seat 30. The downwardly and outwardly sloping walls of the conical valve members 29 and 31 have a slope greater than the maximum angle of repose for the granules to be passed through the device.

At its upper regions the actuating pin 28 presents two transverse pins 33 and 34 between which two limbs 35a and 35b of an actuating lever 35 are engaged. The actuating lever 35 extends along the interior of the handle part 23, is pivotable at or near its mid-centre on a pin 36, and at its end remote from the limbs 35a and 35b presents an actuating button end 37, which protrudes through an opening 21a in the upper regions of the handle part 23 remote from the measuring part 22.

The actuating lever 35 is urged anti-clockwise (as viewed in Fig. 3) by a coil spring 38 to lower the actuating pin 28 to its lowermost position where the valve member 29 is seated on the seat 30.

The actuating lever 35 passes through a sealing washer 39, the periphery of which is retained in an annular recess 40 defined by internal side-walls 21b, 21c of the casing 21, to prevent granules from flowing from the measuring part 22 into the handle part 23.

The valve member 31 includes an underside defined by sloping side walls 31a to prevent the formation of voids beneath said member 31.

The volume of measuring part 22 between valve seat 30 and 32 defines the volume of chemical to be dispensed in each dose and may include an annular insert 41, which may be interchangeable with other annular inserts of different volumes, whereby the volume of the measuring chamber and thereby the dose to be dispensed, may be varied.

When not in use the actuating part 26 of valve 25 is rotated so that the wall 27 closes the opening of the extension 24 to the upper regions of measuring part 22, thereby preventing the flow of granules from part 24 into the measuring part 22.

When the applicator is in use the actuating part 26 is rotated to rotate valve 25 and thereby displace the cylindrical wall 27 from its closure position to allow granules to flow from duct 13 through extension 24 into the upper regions of the measuring part 22.

With the actuating button 37 released, so that spring 38 rotates the actuating lever 35 anticlockwise, the limbs 35a and 35b acting on pin 33 displace the actuating pin 28 to its lowermost position, where the valve member 29 is engaged with seat 30 thus closing the outlet from the measuring part 22,

With this position of the actuating pin 33 the valve member 31 is displaced from its seat 32 whereupon granules flow from duct 13 through extension 24 into the upper regions of the measuring part 22 and between the valve element 31 and its seat 32 to fully charge the measuring volume defined by the cylindrical wall of the measuring part 22 and the seals 30 and 32.

The said measuring volume will remain fully charged until the actuating button 37 manually is depressed, whereupon the actuating lever 35 is angularly displaced clockwise (as viewed in Fig. 3) about its pivot 36 and the limbs 35a and 35b act on pin 34 to elevate the actuating rod 28. With rod 28 elevated the valve member 29 is elevated from its seat 30, thus allowing the granules in the measured volume to discharge to pipe 15, and valve member 31 is elevated into contact with its respective seat 32, thus closing the inlet to the measuring chamber, whereupon all the granules below the seat 32 discharge from the measuring chamber via the discharge duct 15.

When the discharge of granules has been completed the actuating button 37 is released, the return spring 38 rotates lever 35 anti-clockwise to lower the actuating rod 28, valve member 29 seats on valve seat 30, valve member 31 is displaced from valve seat 32 and the measuring volume is again recharged with granules.

It will now be seen that with the above applicator a uniform dose of granules is discharged each time the actuating button 37 is depressed for the period required to discharge the measuring chamber and the discharge granules fall from the open end of the discharged duct 15, against the deflector plate 19 and fall therefrom to that desired spread pattern.

It should also be noted that the annular seal 32 presents a corner for engagement by the valve element 31 and thus prevents granules being trapped between the seal 32 and the valve member 31 preventing the valve member 31 from full closure.

It should also be noted that most agricultural granules are of relatively small diameter and the opening between valve members 29 and 31 and their respective seats 30 and 32 will generally be more than ten times the diameter of the granules.

In an alternative embodiment of the invention the actuating lever 35 may be lockable in an intermediate position so that the valve members 29 and 31 are both spaced from their respective seats 30 and 32 to allow granules to flow continuously through the control unit to allow for a continuous flow usage of the applicator.

It should also be noted that whilst the above specific embodiment has been described with reference to the distribution of granules, only minor modifications of the illustrated construction are necessary to allow the control unit to dispense measured doses of liquid chemicals.

## Claims

1. A manual applicator, for delivering agricultural chemicals, including a control unit (14) comprising a measuring chamber, inlet means (32) for charging said measuring chamber with chemical, outlet means (30) for discharging chemical from said measuring chamber, first valve means (29) for closing the outlet means (30) from said measuring chamber whilst said chamber is charging with chemical, second valve means (31) for closing the inlet means (32) to said chamber whilst said chamber is discharging chemical through said outlet means (30) and wherein said first and second valve means (29, 31) are interconnected for mutual displacement and a manual actuating lever (35) displaces said first and second valve means (29; 31) between their respective open and closure positions, the measuring chamber being within a measuring part (22) of a casing (21), characterised in that a handle part (23) of the casing (21) extends from the said measuring part (22), the actuating lever (35) extends internally within said handle part (23) and is pivotably supported therein, and said actuating lever (35) has a manually actuable part (37) projecting through an opening (21a) in the handle part (23) of the casing (21).

2. An applicator according to claim 1 characterised in that said outlet means is defined by an annular valve seat (30) in the lower regions of said measuring chamber and said inlet means is defined by an annular valve seat (32) in the upper regions of said measuring chamber when said applicator is orientated for use.

3. An applicator according to claim 1 or 2 characterised in that said first and second valve means (29, 31) are mounted on a common actuating rod (28) axially displaceable within the said chamber.

4. An applicator according to claim 3 characterised in that said actuating rod (28) is axially displaceable in one direction by manual actuation of said actuating lever (35), and returnable in the other direction by a spring (38).

5. An applicator according to any preceding claim characterised in that said measuring chamber is generally cylindrical in configuration and, in the normal orientation for use of the applicator, the central axis of said chamber is substantially vertical.

6. An applicator according to any preceding claim characterised in that said first and second valve means (29, 31) are conical in configuration with sloping side walls inclined, relative to the central axes of said members (29, 31), at an angle greater than the angle of repose for solids chemical in divided form to be passed through the applicator.

7. An applicator according to any preceding claim characterised in that said measuring chamber includes an insert (41), interchangeable with other inserts of different columns.

8. An applicator according to any one of the preceding claims characterised by a shut-off valve (27) within the control unit (14), for shutting-off the supply of chemical of the said measuring chamber.

**Revendications**

1. Applicateur manuel, pour délivrer des produits chimiques agricoles, comprenant une unité de commande (14) comportant une chambre de mesure, un moyen d'entrée (32) destiné à charger d'un produit chimique ladite chambre de mesure, un moyen de sortie (30) destiné à décharger le produit chimique de ladite chambre de mesure, un premier moyen à soupape (29) destiné à fermer le moyen de sortie (30) à partir de ladite chambre de mesure pendant que ladite chambre est chargée du produit chimique, un second moyen à soupape (31) destiné à fermer le moyen d'entrée (32) vers ladite chambre, tandis que ladite chambre se décharge du produit chimique à travers ledit moyen de sortie (30), et dans lequel lesdits premier et second moyens à soupapes (29, 31) sont reliés entre eux pour un déplacement mutuel et un levier manuel (35) d'actionnement déplace lesdits premier et second moyens à soupapes (29, 31) entre leurs positions respectives d'ouverture et de fermeture, la chambre de mesure étant à l'intérieur d'une partie de mesure (22) d'un corps (21), caractérisé en ce qu'une partie de poignée (23) du corps (21) s'étend depuis ladite partie de mesure (22), le levier d'actionnement (35) s'étend intérieurement dans ladite partie de poignée (23) et y est supporté de façon pivotante, et ledit levier d'actionnement (35) comporte une partie (37) pouvant être actionnée manuellement, faisant saillie à travers une ouverture (21a) de la partie de poignée (23) du corps (21).

2. Applicateur selon la revendication 1, caractérisé en ce que ledit moyen de sortie est défini par un siège annulaire (30) de soupape dans les zones inférieures de ladite chambre de mesure et ledit moyen d'entrée est défini par un siège annulaire (32) de soupape dans les zones supérieures de ladite chambre de mesure lorsque ledit applicateur est orienté pour l'utilisation.

3. Applicateur selon la revendication 1 ou 2, caractérisé en ce que lesdits premier et second moyens à soupapes (29, 31) sont montés sur une tige commune (28) d'actionnement pouvant être déplacée axialement à l'intérieur de ladite chambre.

4. Applicateur selon la revendication 3, caractérisé en ce que ladite tige (28) d'actionnement peut être déplacée axialement dans un sens par une action manuelle sur ledit levier d'actionnement (35), et ramenée dans l'autre sens par un ressort (38).

5. Applicateur selon l'une quelconque des revendications précédentes, caractérisé en ce que ladite chambre de mesure est d'une configuration globalement cylindrique et, dans l'orientation normale pour l'utilisation de l'applicateur, l'axe central de ladite chambre est sensiblement vertical.

6. Applicateur selon l'une quelconque des revendications précédentes, caractérisé en ce que lesdits premier et second moyens à soupapes (29, 31) sont d'une configuration conique à parois latérales en pente, inclinées, par rapport aux axes centraux desdits éléments (29, 31), d'un angle supérieur à l'angle d'éboulement de substances chimiques solides sous forme divisée devant passer à travers l'applicateur.

7. Applicateur selon l'une quelconque des revendications précédentes, caractérisé en ce que ladite chambre de mesure comprend un élément rapporté (41), interchangeable avec d'autres éléments rapportés de volumes différents.

8. Applicateur selon l'une quelconque des revendications précédentes, caractérisé par un robinet d'arrêt (27) à l'intérieur de l'unité (14) de commande, destiné à arrêter l'alimentation en produit chimique de ladite chambre de mesure.

**Patentansprüche**

1. Hand-Aufbringungsgerät zum Aufbringen landwirtschaftlicher Chemikalien, einschließlich einer Regeleinheit (14) mit einer Meßkammer, einem Einlaß (32) zum Befüllen der Meßkammer mit Chemikalie, einem Auslaß (30) zum Entleeren von Chemikalie aus der Meßkammer, einer ersten Ventileinrichtung (29) zum Schließen des Auslasses (30) der Meßkammer, während die Kammer sich mit Chemikalie füllt, einer zweiten Ventileinrichtung (31) zum Schließen des Einlasses (32) der Kammer, während die Kammer Chemikalie durch den Auslaß (30) abgibt, wobei die ersten und zweiten Ventileinrichtungen (29, 31) zur gegenseitigen Verschiebung miteinander verbunden sind und ein Hand-Betätigungshebel (35) die ersten und zweiten Ventileinrichtungen (29, 31) zwischen ihren jeweiligen Offen- und Schließpositionen verschiebt, wobei die Meßkammer in einem Abmeßteil (22) eines Gehäuses (21) angeordnet ist, dadurch gekennzeichnet, daß ein Griffteil (23) des Gehäuses (21) sich aus dem Abmeßteil (22) erstreckt, der Betätigungshebel (35) sich innerhalb des Griffteils (23) erstreckt und schwenkbar darin abgestützt ist, und der Betätigungshebel (35) ein handbetätigbares Teil (37) aufweist, das durch eine Öffnung (21a) in dem Griffteil (23) des Gehäuses (21) ragt.

2. Aufbringungsgerät nach Anspruch 1, dadurch gekennzeichnet, daß der Auslaß durch einen kreisringförmigen Ventilsitz (30) im unteren Bereich der Meßkammer gebildet ist und der Einlaß durch einen kreisringförmigen Ventilsitz (32) im oberen Bereich der Meßkammer gebildet ist, sofern das Aufbringungsgerät zum Gebrauch ausgerichtet ist.

3. Aufbringungsgerät nach Anspruch 1 oder 2, dadurch gekennzeichnet, daß die ersten und zweiten Ventileinrichtungen (29, 31) auf einer gemeinsamen, axial innerhalb der Kammer verschiebbaren Betätigungsstange (28) befestigt sind.

4. Aufbringungsgerät nach Anspruch 3, dadurch gekennzeichnet, daß die Betätigungsstange (28) in einer Richtung durch manuelle Betätigung des Betätigungshebels (35) axial verschiebbar ist und in der anderen Richtung durch eine Feder (38) rückstellbar ist.

5. Aufbringungsgerät nach eine der vorhergehenden Ansprüche, dadurch gekennzeichnet, daß die Maßkammer eine im wesentlichen zylindrische Gestalt aufweist und, in der für den Gebrauch des Aufbringungsgeräts normalen Ausrichtung, die Mittelachse der Kammer sich im wesentlichen vertikal erstreckt.

6. Aufbringungsgerät nach einem der vorhergehenden Ansprüche, dadurch gekennzeichnet, daß die ersten und zweiten Ventileinrichtungen (29, 31) eine konische Gestalt mit geneigten Seitenwänden aufweisen, die bezüglich der Mittelachse der Einrichtungen (29, 31) in einem Winkel geneigt sind, der größer ist als der Gleitwinkel von durch das Aufbringungsgerät zu führenden festen Chemikalien in zerteilter Form.

7. Aufbringungsgerät nach einem der vorhergehenden Ansprüche, dadurch gekennzeichnet, daß die Maßkammer einen Einsatz (41) einschließt, der gegen andere Einsätze unterschiedlichen Volumens auswechselbar ist.

8. Aufbringungsgerät nach einem der vorhergehenden Ansprüche, gekennzeichnet durch ein Absperrventil (27) in der Regeleinheit (14) zum Absperren des Zuflusses an Chemikalie zu der Meßkammer.

Fig 1

Fig 2

FIG 3

EP 0 292 927 B1